# EUROPEAN PATENT APPLICATION

(11) **EP 3 199 831 A1**
(43) Date of publication of application: **02.08.2017**
(21) Application number: 17152978.7
(22) Date of filing: 25.01.2017
(51) Int. Cl.: F16F 15/32, B60B 1/00, F16F 15/34

(54) **DEVICE FOR THE BALANCING OF WHEELS**

(30) Priority: 25.01.2016 ES 201630080 U
(71) Applicant: Sancho Ginovart, Jorge, 43500 Tortosa (ES)
(72) Inventor: Sancho Ginovart, Jorge, 43500 Tortosa (ES)
(74) Representative: Oficina Ponti, SLP

(57) **Abstract**

The invention relates to a device to achieve the static balance of wheels which have rims (15) with orifices (14) for the placement of spokes (17), performing the installation of said device in an invisible and safe place of the wheel, for which it uses a counterweight body (10) with a buffer, by way of a cap, installed in the hole of introduction of the spokes nipples in said rim (15), located in the seat area of the tyre in said rim (15).

## Description

### Object of the Invention

More specifically, the invention relates to a device to achieve the static balance of wheels which have rims with orifices for the placement of spokes.

### State of the Art

The balancing of wheels in vehicles, whether motor or propelled by the effort of one or more individuals, is performed to avoid vibrations and imbalances in the rolling thereof, starting from a static balance.

These imbalances and/or vibrations cause, in vehicles of bicycle type, extra efforts to be able to wheel as we would do with completely balanced wheels, extending the life of components such as shafts, bearings, spokes, etc., having regular wear of the tyres, and increasing the performance with greater cruising speed, reduction of braking distance, greater curve travel speed, better grip of the tyres and better performance of the bicycle or vehicle in the different conditions of use. As an example, having an imbalance of 18 grams at a speed of 50 km/h for a cyclist means a vibration force of close to 1 kg, 6 oscillations per second.

The most typical and well-known balancing system is that of adhesion of a certain weight in the outer surface of the rim that forms the wheel, in a determined position that achieves balancing the weight difference of said wheel.

This system is visible and exposed to bumps, to the interaction of pressure washes and to atmospheric and chemical agents, that may act again against the fixing of the weight to the rim and produce or facilitate its detachment, with the consequent risk that it reaches a third party or property which is in the driving path of the vehicle. They also have the drawback of the deterioration of the aesthetic appearance suffered by the rims designed in many cases with specific graphics.

### Description of the Invention

The present invention has the purpose of being able to have a device that allows the balancing of wheels with rims with demountable spokes, performing its installation in an invisible and safe place, resolving the drawbacks described in the state of the art section.

The balancing device object of the present invention is formed by at least one counterweight body, preferably cylindrical, and a buffer by way of a cap, where said device is installed in the rim of the wheel to balance, more specifically making use of the hole of introduction of the spokes nipples in said rim, located in the area of the tyre seat in the rim, placing the cap in said area, where the tubular tyre adheres.

This balancing device is formed by a piece of a material, preferably metal, which has a specific associated weight, and a form and a size so that it fits in the hole of the spokes nipples, as it has identical form or which allows its dimensional fitting in said holes, going through the rim surface. To avoid that the counterweight body cannot slide and pass totally through the rim hole, being lost in the inside thereof and causing an adverse effect, the device has at one of its free ends a buffer by way of a cap which has a form or diameter greater than the rim hole, so that it is perfectly fixed, avoiding falling inside it.

In this way, the balancing device by one of its ends has the ideal form for its passage through the mounting holes of the rim spokes nipples, and by the other end it has a form which prevents the passage through said hole in its entirety. This cap has, preferably, an external form that is not aggressive against the tyre which is going to be mounted on it, since it is going to be this tyre, with its inflated pressure, that which makes said device fix its position. In practice, typically, the placement area of the spokes nipples is covered with a protective strip to minimize possible interactions between the tyre tube and rim, or, in the case of the tubular, a double-sided adhesive tape or contact glue film is installed.

The balancing device is placed in the specific hole where it is necessary to incorporate a specific weight, so that there are various sizes of balancing device bodies, in addition to different materials, to be able to choose the exact weight for the correct balancing, with an appreciation that can reach hundredths of a gram.

Preferably, the balancing device is composed of two separable parts that are joined, these being the body and cap, so that the manufacturing of different whole balancing devices is not necessary to cover the different weights that are needed in the balancing. In this way with a single cap, which is joined to a variety of bodies of different sizes and weights, it is possible to have a simpler manufacturing of the balancing device, and more flexible, having the added advantage of being able to reuse the cap in the event of re-balancing where it replaces the already installed counterweight body by the new weight achieved that performs said balancing.

The joining means between the body and the cap of the balancing device can be various, from systems of threaded joining parts of screw-type which traverses both, to fitting systems between both by means of coupling.

In this way, with the use of the balancing device object of the present invention, it achieves the static balance of wheels with demountable rim spokes which is not visible once the wheel is mounted, with the subsequent aerodynamic benefits, as it remains inside the rim. This internal disposal of the device cancels out the exposure to bumps, the effects of pressurized washes, atmospheric and chemical agents, and avoiding the possible damages generated by the detaching of said body at travelling speed.

It also achieves, advantageously, that the device location is exactly in the middle of the rim section, something which in externally mounted devices must be performed by fixing a counterweight to each side of the rim.

Other details and characteristics shall be revealed in the course of the description made below, where reference is made to the drawings attached to this specification, where a graphic representation of the invention is shown by way of illustrative but non-limitative example.

### Description of the figures

Figure 1 a and 1b are a perspective view of the wheel with tubular tyre and the detail of a partial section A-A' of said wheel with balancing device installed.
Figure 2 is a perspective view of the balancing device.
Figure 3 is an exploded view of the balancing device.

### Description of an embodiment of the Invention

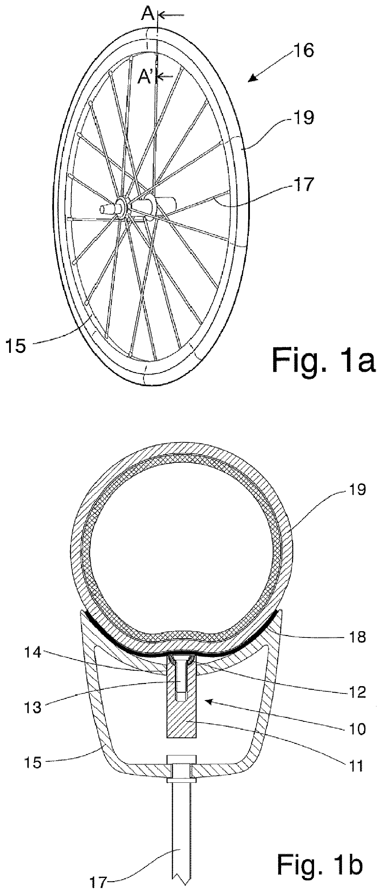

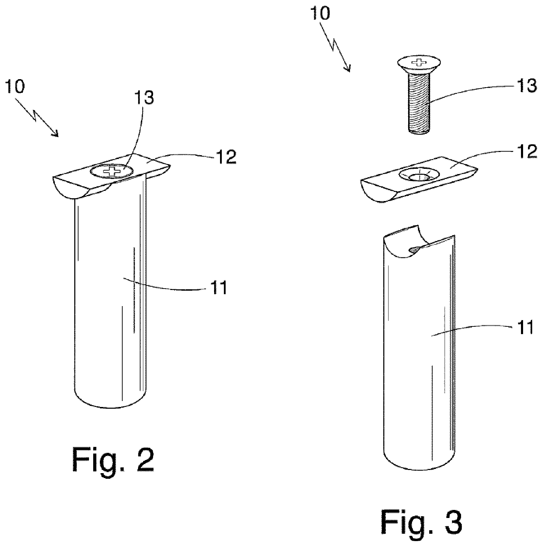

In one of the preferred embodiments of the invention, as shown in figures 1, 2 and 3, the balancing device (10) is formed by a counterweight body (11), a buffer by way of a cap (12) and a joining means which in the present invention is a screw (13), which is inserted in the complementary openings of the cap (12) and is threaded to the body (11).

The counterweight body (11) is of a cylindrical shape with diameter identical to the holes (14) of the rim (15) of the wheel (16) with demountable spokes (17). In this way, it is possible to have various counterweight bodies (11), with different lengths or of different materials, to be able to apply one weight or another when balancing said wheel.

The cap (12) has a different shape to the hole (14) of the rim (15), of larger size than it (14), and which in the present embodiment has half-round shape to adapt to the form of the rim (15) in the area where the tubular tyre (19) is positioned. The opening of the cap (12) and that of the body (11) are coincident so that the screw (13), when introduced in both, creates an assembly that can be introduced through the free end of the body (11) through the hole (14) of the rim (15) and which does not slip through said hole (14) thanks to the buffer made by the cap (12).

This design of the cap (12) is exclusive for this type of rims (15). If other different ones are used, the form of the cap (12) would be adapted to the new design of the rim (15) but it would not vary its placement system, basic characteristics indicated here.

Once placed in the hole (14), the device (10), the weight of which has been determined to perform the correct balancing of the wheel (16), the tubular tyre (19) is mounted and adhered on the double-sided adhesive tape (18), which has been fixed on the rim surface where the holes (14) are located, so that at the time of adding pressure to the tubular tyre (19), with effective pressure value of 8 to 12 bars, said tyre (19) will make more than sufficient effort for the fixing of the device (10) in its position, preventing it coming out of the hole (14). The tape (18) which covers the area of the rim (15) corresponding to the holes (14) therethrough the spokes nipples (17) are introduced, and thus also protect the tubular tyre (19) from the possible interactions with the corners and shapes of the cap (12).

In alternative embodiments, the cap (12) and the counterweight body (11) are joined by means of couplable or complementary shapes between the two parts, such as threads, tabs, dovetails, etc., acting said complementary joining forms as joining means between both (11 and 12).

In another alternative embodiment, the balancing device (10) is formed from a single part, having a body (11) with the form of a cylinder couplable to the holes (14) of the rim (15), and which at its end increases its section and/or changes so as not to pass through said hole (14).

Having sufficiently described the present invention, in correspondence with the attached figures, it is easy to understand that any modifications of details deemed convenient can be introduced therein, provided that it does not alter the essence of the invention which is summarized in the following claims:

## Claims

1. Device for the balancing of wheels of those installed in a wheel to achieve their balancing and a specific weight is associated to it, **characterized in that** the device (10) is formed at least by a counterweight body (11) of identical form or which allows its dimensional fitting in the through-hole (14) of the spokes nipples (17) of the rim (15) of the wheel (16), which at its end has a buffer by way of a cap (12) of greater size and/or shape different to said hole (14) preventing its passage therethrough.

2. Device for the balancing of wheels according to claim 1, wherein the counterweight body (11) and the cap (12) are formed by a single piece which has a body with one end with form which can be coupled to the holes (14) of the rim (15), and which in its end increases its section and/or changes its shape as not to pass through said hole (14) of the rim (15).

3. Device for the balancing of wheels according to claim 1, wherein the counterweight body (11) and the cap (12) are formed by two independent parts which are solidly joined by joining means (13).

4. Device for the balancing of wheels according to claim 3, wherein the joining means (13) between the counterweight body (11) and the cap (12) are formed by a threaded joining part of screw type which joins both together.

5. Device for the balancing of wheels according to claim 3, wherein the joining means (13) between the counterweight body (11) and the cap (12) are formed by couplable or complementary joining forms between the two parts.

6. Device for the balancing of wheels according to claim 1, wherein the counterweight body (11) has different lengths and/or is formed by different materials according to the requirement of the weight that must be installed for the balancing, being joined to the corresponding cap (12) for its installation.

7. Device for the balancing of wheels according to claim 1, wherein the cap (12) has the form of the area of the rim (15) where the tyre (19) is placed.

8. Device for the balancing of wheels according to claim 7, wherein the cap (12) has half-round shape to adapt to the form of the surface of the rim (15) where the through-holes (14) of the spokes nipples (17) are located.
